# EUROPEAN PATENT APPLICATION

(11) **EP 3 890 402 A1**
(43) Date of publication of application: **06.10.2021**
(21) Application number: 18941738.9
(22) Date of filing: 30.11.2018
(51) Int. Cl.: H04W 48/16, H04W 36/32, H04W 88/04

(54) **TERMINAL DEVICE AND METHOD**

(71) Applicant: Sony Group Corporation, 108-0075 Tokyo (JP)
(72) Inventor: WACHI, Kiyonori, Tokyo 140-0002 (JP)
(74) Representative: D Young & Co LLP
(86) International application number: PCT/JP2018/044119
(87) International publication number: WO 2020/110277

(57) **Abstract**

To enable reduction of power consumption by determination of a frequency band appropriate to the status of a terminal device and the purpose of communication.

Provided is a terminal device including a determination unit configured to determine a frequency band for use in communication from two or more independent frequency bands, based on information related to this terminal; and a communication control unit configured to control the communication with use of the frequency band determined by the determination unit, in which the two or more frequency bands have a predetermined difference or more between the two or more frequency bands.

## Description

### Field

The present disclosure relates to a terminal device and a method.

### Background

In recent years, in order to ensure the quality of cellular communication, there has been developed a technique of making a change between communication schemes for use in communication. For example, Patent Literature 1 discloses a technique of making a switch between communication schemes or between frequency bands, based on the movement status of a terminal device.

### Citation List

### Patent Literature

Patent Literature 1: JP 2017-152821 A

### Summary

### Technical Problem

The technique described in Patent Literature 1, however, does not take into consideration of the difference in radio wave characteristics between the frequency bands for use in cellular communication. Thus, depending on the status or situation of a terminal device, it is assumed that communication disconnection or handover occurs frequently and the power consumption of the terminal device increases.

### Solution to Problem

According to the present disclosure, a terminal device is provided that includes: a determination unit configured to determine a frequency band for use in communication from two or more independent frequency bands, based on information related to the terminal; and a communication control unit configured to control the communication with use of the frequency band determined by the determination unit, wherein the two or more frequency bands have a predetermined difference or more between the two or more frequency bands.

Moreover, according to the present disclosure, a method, by a processor included in a terminal device, is provided that includes: determining a frequency band for use in communication from two or more independent frequency bands, based on information related to the terminal; and controlling the communication with use of the frequency band determined by the determining, wherein the two or more frequency bands have a predetermined difference or more between the two or more frequency bands.

### Brief Description of Drawings

FIG. 1 is an explanatory illustration of the overview of a communication system 1 according to an embodiment of the present disclosure.
FIG. 2 is an explanatory diagram illustrating an exemplary functional configuration of a terminal device 20 according to the embodiment of the present disclosure.
FIG. 3 is an explanatory table of exemplary frequency bands and power consumptions for use in communication according to the present embodiment.
FIG. 4 is an explanatory table indicating an exemplary operation of determining a frequency band and a communication scheme based on a movement status of the terminal device 20, by a determination unit 242 according to the same embodiment.
FIG. 5 is an explanatory table indicating an exemplary operation of determining a frequency band and a communication scheme based on an operation status of the terminal device 20, by a determination unit 242 according to the same embodiment.
FIG. 6 is an explanatory table indicating an exemplary operation related to determination of a frequency band and a communication scheme based on information related to a base station communicable with the terminal device 20, by the determination unit 242 according to the same embodiment.
FIG. 7 is an explanatory illustration of an example of determining a frequency band and a communication scheme corresponding to position information of the terminal device 20 according to the same embodiment.
FIG. 8 is an explanatory table indicating an example of determining a frequency band and a communication scheme corresponding to position information of the terminal device 20 according to the same embodiment.
FIG. 9 is an explanatory flowchart of an exemplary flow of operation related to determination of a frequency band and a communication scheme for use in communication by the terminal device 20 according to the same embodiment.
FIG. 10 is a block diagram illustrating an exemplary hardware configuration of the terminal device 20 according to the embodiment of the present disclosure.

### Description of Embodiments

A preferred embodiment of the present disclosure will be described in detail below with reference to the accompanying drawings. Note that in the present specification and the drawings, the same reference signs are given to constituent elements having substantially the same functional configuration and the redundant description will be omitted.

Note that the description will be given in the following order.
1. Overview
2. Embodiment
2-1. Exemplary Functional Configuration
2-2. Specific Examples
4. Exemplary Hardware Configuration
5. Conclusion

### <1. Overview>

First, the overview of the present disclosure will be described. In recent years, the specifications of the fifth generation-new radio (5G-NR) that is a next-generation communication system have been studied in the third generation partnership project (3GPP). Specifically, the scope of standardization for 5G-NR includes high speed and large capacity (enhanced mobile broadband; eMBB), multiple connections (massive machine type communication; mMTC), and low latency and high reliability (ultra-reliable and low latency communications; URLLC).

Particularly, in order to achieve high-speed communication in eMBB, it is necessary to expand a frequency spectrum for use in wireless communication. Therefore, for 5G-NR, there has been studied the use of a high frequency spectrum represented by a millimeter wave spectrum, for example. Specifically, for 5G-NR, the frequency spectrum definition enabling assignment to 24 GHz or more has been added. Use of a high frequency band enables a higher speed communication as compared with the case of the frequency band that has been used before.

Meanwhile, if the frequency band for use in communication varies, the radio wave characteristics will change. For example, for communication in a high frequency band, the transmission power is higher than that in the frequency band used in the wireless communication system before 4G, so that the power consumption in transmission of radio signals increases. In addition, for example, for communication in a high frequency band, it is assumed that the modem processing load of a terminal device increases, which results in an increase in the power consumption as compared with other frequency bands.

In addition, a radio wave in a high frequency spectrum has a larger propagation loss and a higher straightness, so that the coverage area is smaller as compared with the frequency band used in the wireless communication system before 4G. Thus, for example, in a situation where the terminal device is moving, it is assumed that the handover processing occurs frequently and the power consumption increases due to the processing.

On the other hand, depending on the amount of data of cellular communication performed by the terminal device, a communication speed as high as the communication speed when a high frequency band is used does not always be required. For example, the amount of data that is communicated is small in transmission and reception of character messages, and thus it is assumed that there is no problem even if a higher communication speed in a high frequency band is not provided.

In view of the above points, it is desired to reduce power consumption by determination of a frequency band appropriate to the status of the terminal device and the purpose of communication.

Therefore, the terminal device according to an embodiment of the present disclosure has a function of determining a frequency band for use in communication, based on the status of this terminal. Furthermore, the terminal device according to the embodiment of the present disclosure has a function of determining a communication scheme for use in communication, based on the status of this terminal. Such functions enable communication to be performed suitably for the status of this terminal, and enable suppression of power consumption depending on the status.

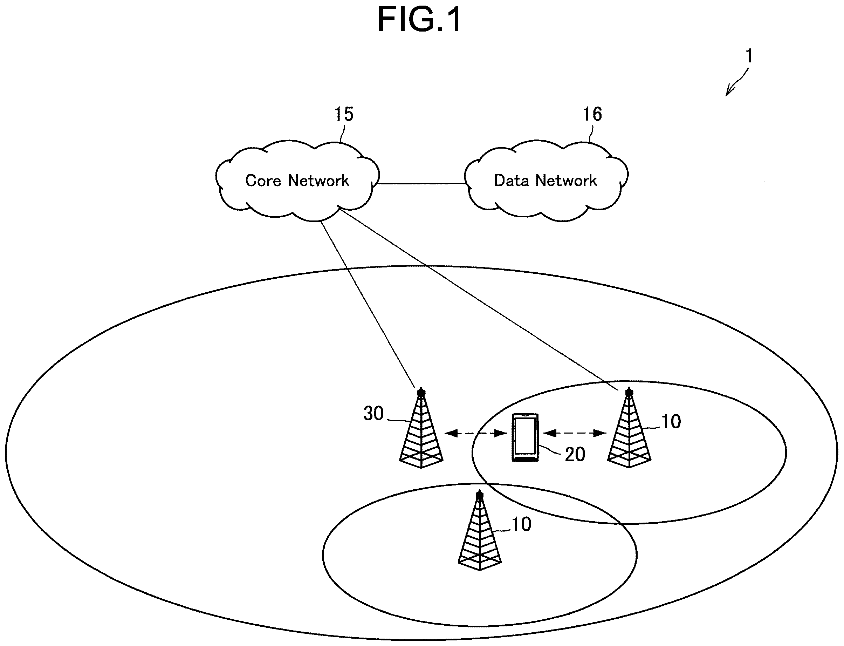

Subsequently, the overview of a communication system 1 according to the embodiment of the present disclosure will be described. FIG. 1 explanatory illustrates the overview of the communication system 1 according to the embodiment of the present disclosure. FIG. 1 illustrates a 5GNR base station 10, a terminal device 20, and a long term evolution (LTE) base station 30.

Note that hereinafter, in the present specification, the non-standalone (NSA) mode of the 5G-NR communication system will be described as an example. The NSA mode is a mode that uses an LTE line in achievement of 5G-NR communication. Specifically, the NSA mode is a mode in which transmission and reception of control signals are performed via an LTE line and transmission and reception of data signals are performed via a 5G-NR line.

On the other hand, a technique according to the present disclosure is also be applicable to the standalone (SA) mode of the 5G-NR communication system. The SA mode is a mode in which transmission and reception of both control signals and data signals are performed via a 5G-NR line. The 5G-NR communication system communication is merely an example as a matter of course, and thus the present technique may be applicable to other communication systems.

The 5GNR base station 10 is a base station that provides 5G-NR wireless communication. The 5GNR base station 10 is connected to a core network 15. Here, the core network 15 is connected to a data network 16 via a gateway device (not illustrated). In addition, as illustrated in FIG. 1, the cell of the 5GNR base station 10 may have a range smaller than that of the LTE base station 30 described below.

The terminal device 20 connects to the 5GNR base station 10 or the LTE base station 30 to use the wireless communication service. The terminal device 20 can be, for example, a smartphone. Note that the terminal device 20 transmits a control signal to and receives a control signal from the LTE base station 30, and transmits a data signal to and receives a data signal from the 5GNR base station 10.

Furthermore, the terminal device 20 determines a frequency band for use in communication from two or more independent frequency bands, based on information related to this device. Here, the information related to this device refers to, in communication, information related to a status that may affect the status of the communication. The information related to this device includes, for example, a movement status or an operation status of this device. That is, the terminal device 20 can perform communication in the frequency band and the communication scheme appropriate to the movement status or the operation status of this device.

The LTE base station 30 is a base station that provides LTE wireless communication. The LTE base station 30 is connected to the core network 15 similarly to the 5GNR base station 10.

### <<2. Embodiment>>

### <2-1. Exemplary Functional Configuration>

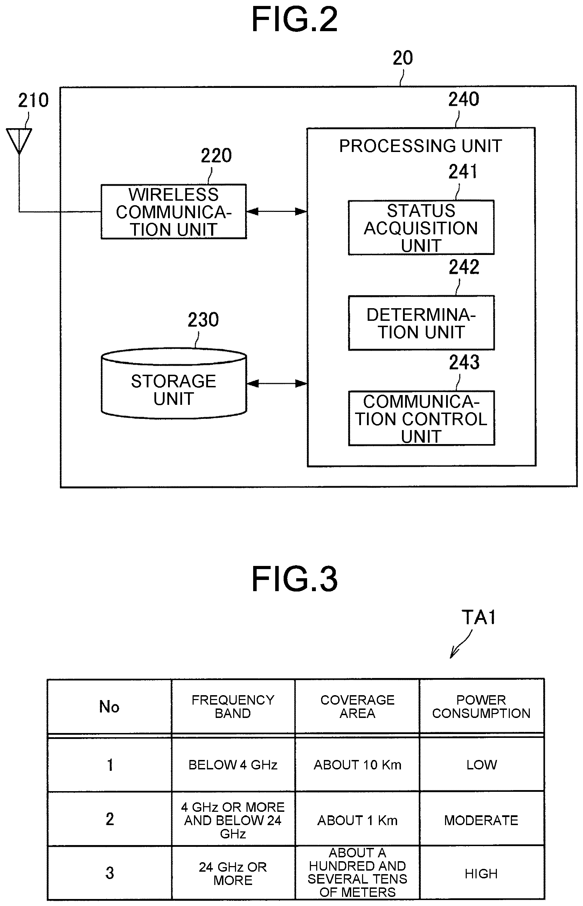

Subsequently, an exemplary functional configuration of the terminal device 20 according to the embodiment of the present disclosure will be described. FIG. 2 is an explanatory diagram illustrating the exemplary functional configuration of the terminal device 20 according to the embodiment of the present disclosure. As illustrated in FIG. 2, the terminal device 20 according to the embodiment of the present disclosure includes an antenna unit 210, a wireless communication unit 220, a storage unit 230, and a processing unit 240.

The antenna unit 210 radiates, as a radio wave, a signal output by the wireless communication unit 220 described below into space. Furthermore, the antenna unit 210 converts a radio wave in the space into a signal and outputs the signal to the wireless communication unit 220.

The wireless communication unit 220 transmits and receives a signal. For example, the wireless communication unit 220 receives a downlink signal from a base station and transmits an uplink signal to the base station.

The storage unit 230 temporarily or permanently stores programs and various pieces of data for operation of the terminal device 20. For example, the storage unit 230 may store various pieces of information necessary for the terminal device 20 to perform wireless communication.

The processing unit 240 provides various functions of the terminal device 20. The processing unit 240 includes a status acquisition unit 241, a determination unit 242, and a communication control unit 243. Note that the processing unit 240 may further include other constituent elements other than these constituent elements. That is, the processing unit 240 may perform operations other than the operations of these constituent elements.

The status acquisition unit 241 has a function of acquiring information related to the terminal device 20 (this terminal). The information related to the terminal device 20 refers to, for example, a movement status or an operation status of the terminal device 20. In addition, the status acquisition unit 241 may acquire information regarding wireless communication of the terminal device 20.

Here, the movement status of the terminal device 20 is specifically the movement speed of the terminal device 20, that is, the speed of the terminal device 20 caused by the movement of the user carrying the terminal device 20. For example, the status acquisition unit 241 may acquire the movement speed of the terminal device 20, with an accelerometer.

The example of the movement status of the terminal device 20 also includes the position of the terminal device 20. The status acquisition unit 241 may calculate the position of the terminal device 20, with a radio signal transmitted from a global navigation satellite system (GNSS) satellite and received by the antenna unit 210. Note that the status acquisition unit 241 may acquire the position of the terminal device 20, with an accelerometer or a gyro sensor in a situation where the antenna unit 210 is difficult to receive a radio wave from the GNSS satellite.

In addition, the operation status of the terminal device 20 specifically refers to a type of processing that the terminal device 20 performs. The type of processing that the terminal device 20 performs may change depending on, for example, the type of application that the terminal device 20 runs.

The determination unit 242 determines a frequency band for use in communication from the two or more independent frequency bands, based on the information related to the terminal device 20 acquired by the status acquisition unit 241. The determination unit 242 may determine the frequency band and the communication scheme such that power consumption is smaller. Furthermore, for use of the NSA mode of the 5G-NR communication system, the determination unit 242 may determine a frequency band and a communication scheme for use in data communication. Details of the determination of a frequency band and a communication scheme by the determination unit 242 will be described below.

The communication control unit 243 makes a control such that the wireless communication unit 220 performs communication with use of the frequency band and the communication scheme determined by the determination unit 242.

The exemplary functional configuration example of the terminal device 20 according to the present embodiment has been described above. Note that the above functional configuration described with reference to FIG. 2 is merely an example, and thus the functional configuration of the terminal device 20 according to the present embodiment is not limited to such an example. The functional configuration of the terminal device 20 according to the present embodiment can be flexibly modified in accordance with specifications and operations. The configuration for use can be changed appropriately in accordance with the technical level at each time when the present embodiment is implemented. In addition, an exemplary hardware configuration of the terminal device 20 will be described below.

### <2-2. Specific Examples>

Hereinafter, specific examples of determination by the determination unit 242 of the terminal device 20 according to the present embodiment will be described. First, before the description, the relationship between a frequency band, a coverage area, and a power consumption will be described. FIG. 3 is an explanatory table of exemplary frequency bands and power consumptions for use in communication according to the present embodiment. FIG. 3 illustrates Table TA1 indicating each frequency band as well as the corresponding coverage area and power consumption.

As the frequency band for use in communication changes, the coverage area and the power consumption change. Typically, as the frequency increases, the propagation loss increases and the orthogonality increases, so that the coverage area is smaller. Thus, as the coverage area of the terminal device 20 is smaller, the frequency of handover due to the movement increases, and thus power consumption due to processing relating to the handover increases. Furthermore, as the frequency increases, the load of processing by the terminal device 20 due to transmission and reception of radio waves increases, and thus the power consumption increases.

Therefore, the two or more frequency bands that are candidates for determination by the determination unit 242 are mutually independent and are different in propagation characteristics. That is, the two or more frequency bands have a predetermined difference or more therebetween. Note that this is because difference in propagation characteristics leads to a change in the size of the coverage area and the processing load of the modem unit relating to transmission and reception of radio waves.

The examples indicated in FIG. 3 will be described below. First, in Table TA1, No represents identification information. When No is "1", the frequency band has a range below 4 GHz, the coverage area is about 10 km, and the power consumption is lower than those of other frequency bands.

Furthermore, when No is "2", the frequency band has a range of 4 GHz or more and below 24 GHz, the coverage area is about 1 km, and the power consumption is higher than that when No is "1".

Still furthermore, when No is "3", the frequency band has a range of 24 GHz or more, the coverage area is about a hundred and several tens of meters, and the power consumption is further higher than that when No is "1" or "2".

Note that the determination unit 242 determines which the frequency band of No should be used, based on the information related to the terminal device 20 acquired by the status acquisition unit 241.

For example, in a case where the status acquisition unit 241 has acquired such a movement status in which handover does not occur frequently even if the coverage area is about a hundred and several tens of meters, the determination unit 242 may determine use of the frequency band of 24 GHz or more which No is "3". Furthermore, for example, in a case where the status acquisition unit 241 has acquired a status in which the terminal device 20 performs processing that does not require high-speed communication such as transmission and reception of a short message, the determination unit 242 may determine use of the frequency band below 4 GHz which No is "1" such that the power consumption is suppressed.

In addition, the communication control unit 243 may control the wireless communication, with the frequency band of No determined by the determination unit 242. In addition, the classification of frequency bands and communication schemes is not limited to the above examples as a matter of course. Note that the user may manually determine which frequency band the communication control unit 243 should use for communication.

As described above, the terminal device 20 can determine a frequency band for use in communication based on information related to this terminal, and can perform the communication, with the determined frequency band. Such a function enables communication to be performed more suitably for the terminal device 20 in consideration of speed and a status of radio waves.

Furthermore, the determination unit 242 may determine a communication scheme for use in communication, in addition to the frequency band for use in communication. For example, the determination unit 242 may determine either LTE or 5G-NR as a communication scheme for use in communication.

Hereinafter, there will be described an example of determining the frequency band and the communication scheme for use in communication by the determination unit 242.

First, information related to the terminal device 20 includes a movement status of this terminal. As described above, the size of the coverage area changes as the frequency band for use in communication changes. Thus, the terminal device 20 needs to perform communication, with the frequency band and the communication scheme appropriate to the degree of possibility that handover occurs frequently, based on the movement status of this terminal. Therefore, the determination unit 242 may determine the frequency band and the communication scheme for use in communication, based on the movement status of this terminal.

Here, as described above, the movement status of the terminal device 20 refers to, for example, the movement speed of a movement means in use by the user carrying the terminal device 20, the movement speed of the terminal device 20, or the like.

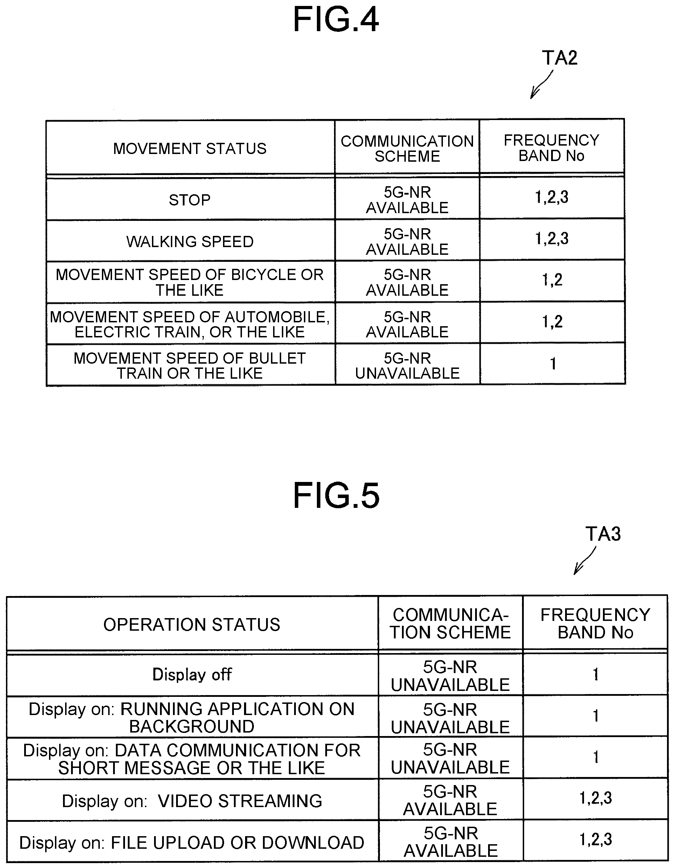

FIG. 4 is an explanatory table indicating an exemplary operation of determining a frequency band and a communication scheme based on a movement status of the terminal device 20, by the determination unit 242 according to the present embodiment. FIG. 4 illustrates Table TA2 indicating each movement status of the terminal device 20 and the combination of a communication scheme and a frequency band corresponding to the movement status.

The determination unit 242 may determine the communication scheme and the frequency band for use in communication, based on the movement status acquired by the status acquisition unit 241. Specifically, the determination unit 242 may determine the communication scheme and the frequency band corresponding to the movement status acquired by the status acquisition unit 241, with reference to Table TA2 illustrated in FIG. 4.

In the example of FIG. 4, when the movement speed of the terminal device 20 acquired by the status acquisition unit 241 is "walking speed", the determination unit 242 may determine that the communication scheme is "5G-NR available" and the frequency band No is "1, 2, 3".

Here, the communication scheme "5G-NR available" indicates that communication can be performed via a 5G-NR line instead of an LTE line. Furthermore, the frequency band No "1, 2, 3" indicates that the frequency band of No "1", "2" or "3" in Table TA1 illustrated in FIG. 3 will be used.

Note that the classification of the movement status, and the communication scheme and the frequency band No corresponding to the classification indicated in FIG. 4 are merely examples and thus are not limited to such examples. Furthermore, in Table TA2, a specific value of speed may be recorded as a "movement status".

Still furthermore, the status acquisition unit 241 may acquire a movement status of the terminal device 20 by various methods. For example, the status acquisition unit 241 may acquire a movement status from acquisition of the acceleration by the accelerometer, a change of the current position by the GPS, and the like.

As described above, communication is performed with a frequency band and a communication scheme determined based on a movement status, which enables preventing the frequent occurrence of meaningless handover while maintaining the quality of communication.

In addition, the information related to the terminal device 20 includes an operation status of the terminal device 20. Meanwhile, depending on the type of processing that the terminal device 20 performs, even if handover occurs frequently, it may be better to perform communication, with use of a high frequency band having a high communication speed.

Here, the operation status of the terminal device 20 refers to the type of processing that the terminal device 20 performs as described above. For example, the type of processing that the terminal device 20 performs refers to message data communication, video streaming, file upload, or the like.

FIG. 5 is an explanatory table indicating an exemplary operation of determining a frequency band and a communication scheme based on an operation status of the terminal device 20, by the determination unit 242 according to the present embodiment. Similarly to FIG. 4, FIG. 5 illustrates Table TA3 indicating each operation status of the terminal device 20 and the combination of a communication scheme and a frequency band corresponding to the operation status.

The determination unit 242 may determine a communication scheme and a frequency band for use in communication, based on an operation status acquired by the status acquisition unit 241. Specifically, the determination unit 242 may determine the communication scheme and the frequency band corresponding to the operation status acquired by the status acquisition unit 241 with reference to Table TA3 illustrated in FIG. 5.

In the example of FIG. 5, Table TA3 indicates that, when the operation status of the terminal device 20 acquired by the status acquisition unit 241 is "Display off", the determination unit 242 may determine that the communication scheme is "5G-NR unavailable" and the frequency band No is "1".

In addition, Table TA3 indicates that, when the operation status of the terminal device 20 is "Display on: video streaming", the determination unit 242 may determine that the communication scheme is "5G-NR available" and the frequency band No is "1, 2, 3".

Here, "Display on" indicates the display status of the display of the terminal device 20. On the other hand, "Display off" indicates the non-display status of the display of the terminal device 20. Note that when the operation status is "Display off", the corresponding frequency band No is "1, 2, 3" because it can be determined that the user is highly likely not to be operating the terminal device 20 in the non-display status of the terminal device 20. In addition, another reason is that if the user does not hold the terminal device 20 and, for example, keeps it in a bag, use of a high frequency band such as a millimeter wave band increases the propagation loss.

The status acquisition unit 241 may acquire an operation status of the terminal device 20 by various methods. For example, the status acquisition unit 241 may acquire the operation status of the terminal device 20 from information indicating whether or not the display is in the display status, the type of application being run, and the like. Furthermore, the operation status of the terminal device 20 may be whether or not the user is holding the terminal device 20.

As described above, communication is performed with a frequency band and a communication scheme determined based on an operation status, which enables suppressing power consumption with heavy processing not required.

Meanwhile, in order to determine a frequency band and a communication scheme for use in communication, not only information regarding the terminal device 20 but also information regarding a base station may be taken into consideration. That is, the information related to the terminal device 20 may be information related to communication of the terminal device 20, for example, information related to a base station with which the terminal device 20 is communicable.

Here, the information related to the base station includes, for example, identification information for the base station. The storage unit 230 of the terminal device 20 may store a combination of information related to a base station with which communication has been performed, and a communication scheme and a frequency band that have been used for the communication.

In order to transmit a signal to or receive a signal from the base station again, the terminal device 20 may determine a communication scheme and a frequency band for use in communication, with reference to a combination stored in the storage unit 230. Note that the base station refers to the 5GNR base station 10 or the LTE base station 30 illustrated in FIG. 1.

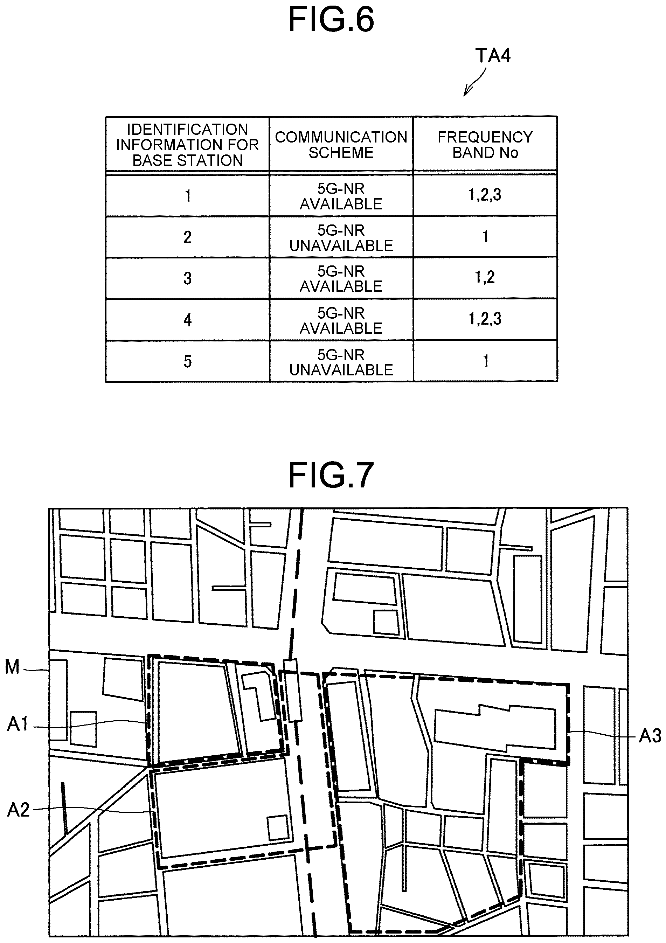

FIG. 6 is an explanatory table indicating an exemplary operation related to determination of a frequency band and a communication scheme based on information related to a base station communicable with the terminal device 20, by the determination unit 242 according to the present embodiment. FIG. 6 illustrates Table TA4 indicating identification information for a base station and the combination of a communication scheme and a frequency band corresponding to the identification information for the base station.

The determination unit 242 may determine a communication scheme and a frequency band for use in communication, based on identification information for a base station stored in the storage unit 230. Specifically, the determination unit 242 may determine the communication scheme and the frequency band corresponding to the base station, with reference to Table TA4 illustrated in FIG. 6. Note that the identification information for the base station may be, for example, the cell ID corresponding to the base station.

In the example of FIG. 6, in order to perform communication with a base station which identification information is "1", the determination unit 242 may determine that the communication scheme is "5G-NR available" and the frequency band No is "1, 2, 3", with reference to Table TA4.

As described above, determination of the frequency band and the communication scheme corresponding to each base station enables communication to be performed in consideration of the situation of each cell.

Note that the installation situation of a base station or the like may be changed, so that information related to the base station stored in the storage unit 230 of the terminal device 20 may be updated at predetermined periods.

Meanwhile, up to the above, there has been described the examples in which the terminal device 20 determines a communication scheme and a frequency band based on a predetermined combination; however, the terminal device 20 may learn a communication scheme and a frequency band for use, based on the result of communication.

For example, based on the status of communication by the communication control unit 243 in a predetermined place, the storage unit 230 of the terminal device 20 may store a frequency band and a communication scheme for use in the place. Here, the status of communication refers to a status related to the quality of communication such as transmission loss of radio waves.

The determination unit 242 may determine a frequency band and a communication scheme for use in communication, with information of each place stored in the storage unit 230 and the communication scheme and frequency band for use in the place. At that time, based on position information of the terminal device 20, the status acquisition unit 241 may acquire that in which of the places the terminal device 20 is present, and the determination unit 242 may determine the communication scheme and frequency band corresponding to the place.

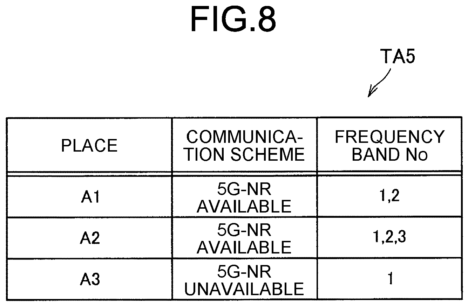

FIGS. 7 and 8 are explanatory illustrations of examples of determining a frequency band and a communication scheme corresponding to position information of the terminal device 20 according to the present embodiment. FIG. 7 illustrates Map M. In addition, Map M indicates Places A1, A2, and A3. FIG. 8 illustrates Table TA5 indicating identification information for each place and the combination of a communication scheme and a frequency band corresponding to the place.

The examples of FIGS. 7 and 8 will be described. The storage unit 230 of the terminal device 20 may store information for each place and a communication scheme and a frequency band for use in the place. Specifically, like Table TA5 illustrated in FIG. 8, the storage unit 230 of the terminal device 20 may store a frequency band and a communication scheme determined from the results of communication in Places A1 to A3 in Map M illustrated in FIG. 7. Furthermore, the determination unit 242 may determine a communication scheme and a frequency band for use in communication, based on Table TA5 stored in the storage unit 230.

For example, when the current position acquired by the status acquisition unit 241 is within Place "A1", the determination unit 242 may determine that the communication scheme is "5G-NR available" and the frequency band No is "1, 2". Furthermore, for example, when the current position acquired by the status acquisition unit 241 is within Place "A3", the determination unit 242 may determine that the communication scheme is "5G-NR unavailable" and the frequency band No is "1".

As described above, communication can be performed with the frequency band and the communication scheme corresponding to a predetermined place. Such a function enables communication to be performed in consideration of the influence of buildings and the like.

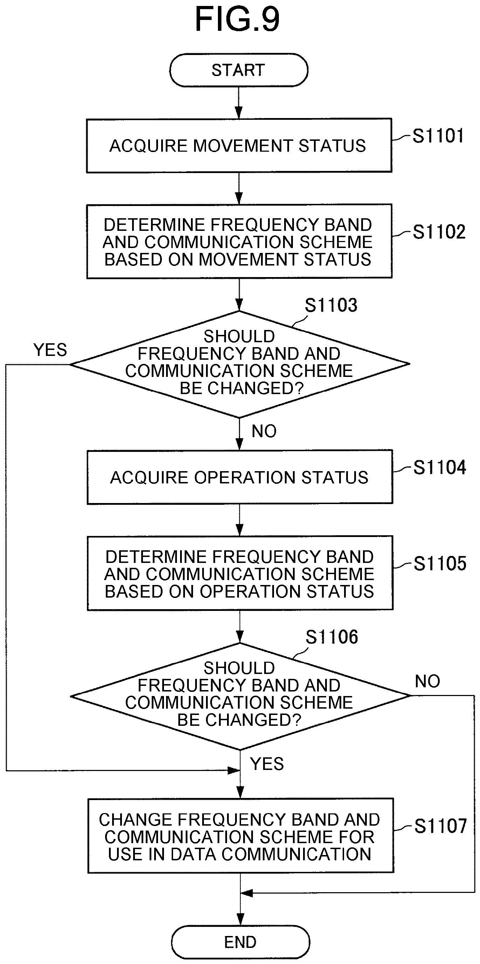

Subsequently, there will be described an exemplary flow of operation related to determination of a frequency band and a communication scheme for use in communication by the terminal device 20 according to the present embodiment. Hereinafter, the flow of operation based on a movement status and an operation status of the terminal device 20 will be described as an example. FIG. 9 is an explanatory flowchart of the exemplary flow of operation related to the determination of the frequency band and the communication scheme for use in communication by the terminal device 20 according to the present embodiment.

Referring to FIG. 9, first, the status acquisition unit 241 of the terminal device 20 acquires a movement status of the terminal device 20 (S1101). Next, the determination unit 242 determines a frequency band and a communication scheme for use in communication, based on the movement status of the terminal device 20 acquired in Step S1101 (S1102).

When the frequency band and the communication scheme determined by the determination unit 242 in Step S1102 are different from the frequency band and the communication scheme currently used for data communication (S1103: Yes), the communication control unit 243 changes the frequency band and the communication scheme currently used for data communication to the frequency band and the communication scheme determined by the determination unit 242 in Step S1102, performs data communication (S1107), and then the terminal device 20 ends its operation.

On the other hand, when the frequency band and the communication scheme determined by the determination unit 242 in Step S1102 are the same as the frequency band and the communication scheme currently used for data communication (S1103: No), the status acquisition unit 241 of the terminal device 20 acquires an operation status of the terminal device 20 (S1104). Next, the determination unit 242 determines a frequency band and a communication scheme for use in communication, based on the movement status of the terminal device 20 acquired in Step S1104 (S1105).

When the frequency band and the communication scheme determined by the determination unit 242 in Step S1105 are different from the frequency band and the communication scheme currently used for data communication (S1106: Yes), the communication control unit 243 changes the frequency band and the communication scheme currently used for data communication to the frequency band and the communication scheme determined by the determination unit 242 in Step S1105, performs data communication (S1107), and then the terminal device 20 ends its operation. Note that for the terminal device 20, when the frequency band determined by the determination unit 242 in Step S1105 includes a frequency band higher than that determined by the determination unit 242 in Step S1102, the communication control unit 243 does not necessarily change the frequency band and the communication scheme.

On the other hand, when the frequency band and the communication scheme determined by the determination unit 242 in Step S1105 are the same as the frequency band and the communication scheme currently used for data communication (S1106: No), the terminal device 20 ends its operation.

Note that the flow of operation that has been described is merely an example, and thus is not limited to such an example. Specifically, the determination unit 242 may determine a frequency band and a communication scheme for use in data communication, based on information that is different from the movement status and the operation status and is related to the terminal device 20. Furthermore, even in a case where the determination unit 242 uses the movement status and the operation status, the conditions for determination of a frequency band and a communication scheme are not limited to the above example. Note that two or more statuses of this terminal may be combined and a frequency band and a communication scheme may be determined. Such a combination of the two or more statuses of this terminal is not limited to the example described in FIG. 9.

Up to the above, there have been described determination in the determination unit 242 and communication control in the communication control unit 243 by the terminal device 20.

Meanwhile, the constituent elements illustrated in FIG. 2 may be implemented in an automobile. An automobile including the constituent elements illustrated in FIG. 2 can determine a frequency band and a communication scheme for use in communication, based on information related to the automobile and can perform communication.

Note that the information related to the automobile includes, for example, the above movement status. The automobile may determine a frequency band and a communication scheme for use in communication, based on the travel speed of the automobile.

In addition, exemplary methods of performing communication by an automobile with a radio wave in a high frequency spectrum such as a millimeter wave include a method of transmitting, by an automobile, a radio wave from a road surface on which the automobile is traveling toward the automobile. Specifically, the exemplary methods includes a method in which a traveling road surface is provided with two or more communication devices at predetermined intervals and the communication devices transmit radio waves to and receive radio waves from an automobile located on the traveling road surface.

Note that in a case where the communication devices that the traveling road surface is provided with are capable of acquiring the movement speed of the automobile, a communication device may be determined as the communication device that predicts, based on the movement speed of the automobile, the position of the automobile after a predetermined time and communicate with the automobile after the predetermined time.

As described above, determination of a frequency band and a communication scheme for use in communication by an automobile enables wireless communication to be performed with the frequency band and the communication scheme that are more suitable.

### <3. Exemplary Hardware Configuration>

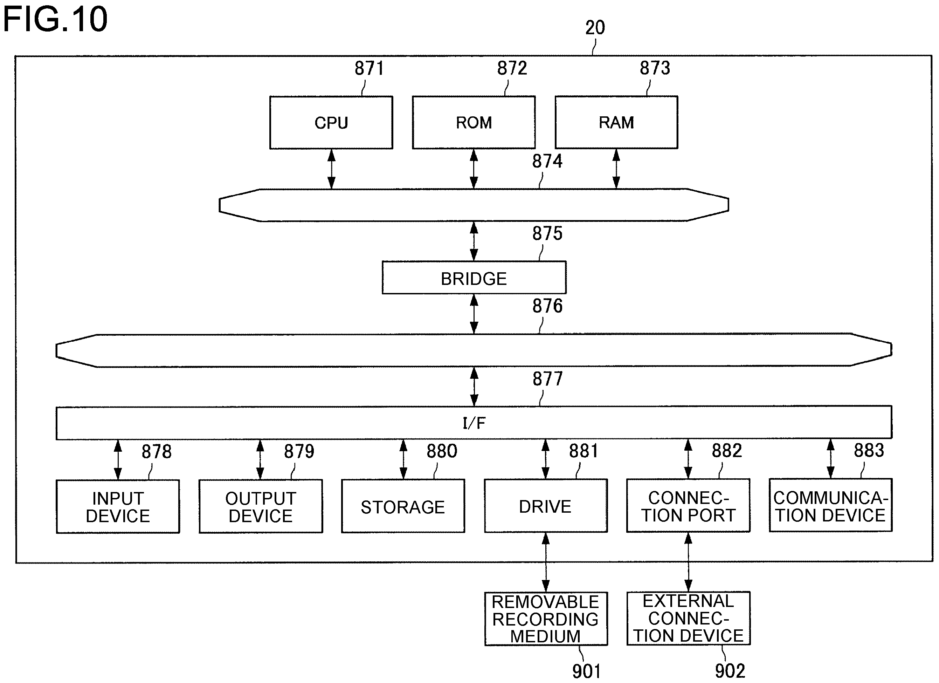

Next, an exemplary hardware configuration of the terminal device 20 according to the embodiment of the present disclosure will be described. FIG. 10 is a block diagram illustrating the exemplary hardware configuration of the terminal device 20 according to the embodiment of the present disclosure. Referring to FIG. 10, the terminal device 20 includes, for example, a processor 871, a read only memory (ROM) 872, a random access memory (RAM) 873, a host bus 874, a bridge 875, an external bus 876, an interface 877, an input device 878, an output device 879, a storage 880, a drive 881, a connection port 882, and a communication device 883. Note that the hardware configuration illustrated here is an example, and thus some of the constituent elements may be omitted. In addition, constituent elements other than the constituent elements illustrated here may be further included.

### (Processor 871)

The processor 871 functions as, for example, an arithmetic processing device or a control device, and entirely or partially controls the operation of each constituent element based on various types of programs recorded in the ROM 872, the RAM 873, the storage 880, or a removable recording medium 901.

### (ROM 872, RAM 873)

The ROM 872 is a means that stores a program read into the processor 871, data for use in calculation, and the like. The RAM 873 temporarily or permanently stores, for example, a program read by the processor 871, various parameters that appropriately change in order to execute the program, and the like.

### (Host Bus 874, Bridge 875, External Bus 876, Interface 877)

The processor 871, the ROM 872, and the RAM 873 are connected mutually, for example, via the host bus 874 capable of high-speed data transmission. On the other hand, the host bus 874 is connected to the external bus 876 having a relatively lower data transmission rate via the bridge 875, for example. The external bus 876 is also connected to the various constituent elements via the interface 877.

### (Input Device 878)

As the input device 878, for example, a mouse, a keyboard, a touch panel, a button, a switch, a lever, or the like can be used. As the input device 878, a remote controller capable of transmitting a control signal with an infrared ray or another radio wave may be used. Furthermore, the input device 878 includes a voice input device such as a microphone.

### (Output Device 879)

The output device 879 is a device, for example, a display device such as a cathode ray tube (CRT), a liquid crystal display (LCD), or an organic EL; an audio output device such as a speaker or a headphone; a printer; a mobile phone; or a facsimile, capable of notifying visually or audibly the user of acquired information. Furthermore, the output device 879 according to the present disclosure includes various vibration devices capable of outputting tactile stimuli.

### (Storage 880)

The storage 880 is a device for storing various types of data. As the storage 880, for example, can be used a magnetic storage device such as a hard disk drive (HDD); a semiconductor storage device; an optical storage device; a magneto-optical storage device; or the like.

### (Drive 881)

The drive 881 is a device that reads information recorded in the removable recording medium 901 such as a magnetic disk, an optical disk, a magneto-optical disk, or a semiconductor memory, or writes information in the removable recording medium 901.

### (Removable Recording Medium 901)

Examples of the removable recording medium 901 include a digital versatile disc (DVD) medium, a Blu-ray (registered trademark) medium, a high-definition (HD) DVD medium, and various types of semiconductor storage media. The removable recording medium 901 may be, for example, an integrated circuit (IC) card equipped with a contactless IC chip, an electronic device, or the like.

### (Connection Port 882)

The connection port 882 is, for example, a port for connecting an external connection device 902 such as a universal serial bus (USB) port, an IEEE1394 port, a small computer system interface (SCSI), an RS-232C port, or an optical audio terminal.

### (External Connection Device 902)

The external connection device 902 is, for example, a printer, a portable music player, a digital camera, a digital video camera, an IC recorder, or the like.

### (Communication Device 883)

The communication device 883 is a communication device for connecting to a network, such as a communication card for wired or wireless LAN, Bluetooth (registered trademark), or a wireless USB (WUSB); a router for optical communication; a router for asymmetric digital subscriber line (ADSL); a modem for various types of communication.

Furthermore, the communication device 883 includes a communication interface that supports wireless communication schemes such as 5G-NR, LTE, and LTE-Advanced. Specifically, the communication device 883 may include a baseband processor that performs signal processing such as coding, decoding, modulation and demodulation, and the like. Still furthermore, the communication device 883 may include a radio frequency (RF) circuit. Still furthermore, the communication device 883 may include an antenna that radiates into space as a radio wave and converts a radio wave in the space into a signal.

### <4. Conclusion>

The embodiment of the present disclosure has been described above in detail with reference to FIGS. 1 to 10. As described above, the terminal device 20 according to the present embodiment can determine a frequency band and a communication scheme for use in communication, based on information related to this terminal and can perform the communication. Thus, the terminal device 20 can perform communication with the power consumption suppressed.

The preferred embodiment of the present disclosure has been described above in detail with reference to the accompanying drawings; however, the technical scope of the present disclosure is not limited to such examples. It is obvious that a person having ordinary knowledge in the technical field of the present disclosure may conceive various types of changes or modifications within the scope of the technical idea described in the claims, and thus it should be understood that the various types of changes or modifications also belong to the technical scope of the present disclosure.

In addition, the effects described herein are merely explanatory or exemplary, and thus are not limited. That is, the technique according to the present disclosure may exhibit other effects apparent to those skilled in the art from the description herein, in addition to or in place of the above effects.

Note that the following configurations also belong to the technical scope of the present disclosure.
(1) A terminal device comprising:
   a determination unit configured to determine a frequency band for use in communication from two or more independent frequency bands, based on information related to the terminal; and
   a communication control unit configured to control the communication with use of the frequency band determined by the determination unit,
   wherein the two or more frequency bands have a predetermined difference or more between the two or more frequency bands.
(2) The terminal device according to (1),
   wherein the information related to the terminal includes a movement status of the terminal,
   the determination unit determines the frequency band for use in the communication, based on the movement status of the terminal, and
   the two or more frequency bands have a predetermined difference or more between sizes of coverage areas corresponding to each of the two or more frequency bands.
(3) The terminal device according to (2),
   wherein the movement status of the terminal includes a movement speed of the terminal, and
   the determination unit determines the frequency band for use in the communication, based on the movement speed of the terminal.
(4) The terminal device according to (3),
   wherein when the movement speed of the terminal is a predetermined speed or more, the determination unit determines a frequency band lower than another frequency band as the frequency band for use in the communication.
(5) The terminal device according to any one of (1) to (4),
   wherein the information related to the terminal includes an operation status of the terminal, and
   the determination unit determines the frequency band for use in the communication, based on the operation status of the terminal.
(6) The terminal device according to (5),
   wherein the operation status of the terminal includes a type of processing that the terminal performs, and
   the determination unit determines the frequency band for use in the communication, based on the type.
(7) The terminal device according to any one of (1) to (6),
   wherein the information related to the terminal includes information corresponding to a base station, and
   the determination unit determines the frequency band for use in the communication, based on the information corresponding to the base station.
(8) The terminal device according to (7),
   wherein the information corresponding to the base station includes identification information for the base station, and
   the determination unit determines the frequency band in accordance with the identification information for the base station.
(9) (8), The terminal device according to any one of (1) to
   wherein the information related to the terminal includes position information of the terminal, and
   the determination unit determines the frequency band for use in the communication, based on position information corresponding to a predetermined place and the position information of the terminal.
(10) The terminal device according to any one of (1) to (9),
   wherein the determination unit further determines a communication scheme for use in the communication, based on the information related to the terminal, and
   the communication control unit controls the communication, with the frequency band and the communication scheme determined by the determination unit.
(11) The terminal device according to any one of (1) to (10),
   wherein the two or more frequency bands each include a millimeter wave band.
(12) The terminal device according to any one of (1) to (11),
   wherein the two or more frequency bands are defined in advance.
(13) The terminal device according to any one of (1) to (12),
   wherein the frequency band for use in the communication includes a frequency band for use in data communication,
   the determination unit determines the frequency band for use in the data communication, and
   the communication control unit controls the data communication in the frequency band determined by the determination unit.
(14) A method, by a processor included in a terminal device, comprising:
   determining a frequency band for use in communication from two or more independent frequency bands, based on information related to the terminal; and
   controlling the communication with use of the frequency band determined by the determining,
   wherein the two or more frequency bands have a predetermined difference or more between the two or more frequency bands.

### Reference Signs List

- 10: 5GNR BASE STATION
- 20: TERMINAL DEVICE
- 210: ANTENNA UNIT
- 220: WIRELESS COMMUNICATION UNIT
- 230: STORAGE UNIT
- 240: PROCESSING UNIT
- 241: STATUS ACQUISITION UNIT
- 242: DETERMINATION UNIT
- 243: COMMUNICATION CONTROL UNIT
- 30: LTE BASE STATION

## Claims

1. A terminal device comprising:
a determination unit configured to determine a frequency band for use in communication from two or more independent frequency bands, based on information related to the terminal; and
a communication control unit configured to control the communication with use of the frequency band determined by the determination unit,
wherein the two or more frequency bands have a predetermined difference or more between the two or more frequency bands.

2. The terminal device according to claim 1,
wherein the information related to the terminal includes a movement status of the terminal,
the determination unit determines the frequency band for use in the communication, based on the movement status of the terminal, and
the two or more frequency bands have a predetermined difference or more between sizes of coverage areas corresponding to each of the two or more frequency bands.

3. The terminal device according to claim 2,
wherein the movement status of the terminal includes a movement speed of the terminal, and
the determination unit determines the frequency band for use in the communication, based on the movement speed of the terminal.

4. The terminal device according to claim 3,
wherein when the movement speed of the terminal is a predetermined speed or more, the determination unit determines a frequency band lower than another frequency band as the frequency band for use in the communication.

5. The terminal device according to claim 1,
wherein the information related to the terminal includes an operation status of the terminal, and
the determination unit determines the frequency band for use in the communication, based on the operation status of the terminal.

6. The terminal device according to claim 5,
wherein the operation status of the terminal includes a type of processing that the terminal performs, and
the determination unit determines the frequency band for use in the communication, based on the type.

7. The terminal device according to claim 1,
wherein the information related to the terminal includes information corresponding to a base station, and
the determination unit determines the frequency band for use in the communication, based on the information corresponding to the base station.

8. The terminal device according to claim 7,
wherein the information corresponding to the base station includes identification information for the base station, and
the determination unit determines the frequency band in accordance with the identification information for the base station.

9. The terminal device according to claim 1,
wherein the information related to the terminal includes position information of the terminal, and
the determination unit determines the frequency band for use in the communication, based on position information corresponding to a predetermined place and the position information of the terminal.

10. The terminal device according to claim 1,
wherein the determination unit further determines a communication scheme for use in the communication, based on the information related to the terminal, and
the communication control unit controls the communication, with the frequency band and the communication scheme determined by the determination unit.

11. The terminal device according to claim 1,
wherein the two or more frequency bands each include a millimeter wave band.

12. The terminal device according to claim 1,
wherein the two or more frequency bands are defined in advance.

13. The terminal device according to claim 1,
wherein the frequency band for use in the communication includes a frequency band for use in data communication,
the determination unit determines the frequency band for use in the data communication, and
the communication control unit controls the data communication in the frequency band determined by the determination unit.

14. A method, by a processor included in a terminal device, comprising:
determining a frequency band for use in communication from two or more independent frequency bands, based on information related to the terminal; and
controlling the communication with use of the frequency band determined by the determining,
wherein the two or more frequency bands have a predetermined difference or more between the two or more frequency bands.
